# EUROPEAN PATENT SPECIFICATION

(11) **EP 3 654 426 B1**
(45) Date of publication and mention of the grant of the patent: **10.03.2021**
(21) Application number: 19179896.6
(22) Date of filing: 13.06.2019
(51) Int. Cl.: H01M 4/66, H01M 10/42, H02H 9/02

(54) **POSITIVE ELECTRODE PLATE AND ELECTROCHEMICAL DEVICE**
POSITIVELEKTRODENPLATTE UND ELEKTROCHEMISCHE VORRICHTUNG
PLAQUE D'ÉLECTRODE POSITIVE ET DISPOSITIF ÉLECTROCHIMIQUE

(30) Priority: 16.11.2018 CN 201811372156
(43) Date of publication of application: 20.05.2020
(73) Proprietor: Contemporary Amperex Technology Co., Limited, Jiaocheng District Ningde City, Fujian 352100 (CN)
(72) Inventor: ZENG, Yuqun, Ningde City, Fujian 352100 (CN); LIN, Yongshou, Ningde City, Fujian 352100 (CN); LI, Zhenhua, Ningde City, Fujian 352100 (CN); JIN, Haizu, Ningde City, Fujian 352100 (CN); ZHANG, Xiaowen, Ningde City, Fujian 352100 (CN)
(74) Representative: Herrmann, Uwe

(56) References cited:
- EP-A1- 3 483 900
- CN-A- 106 898 730
- US-A1- 2016 233 667

## Description

### TECHNICAL FIELD

The present invention relates to the field of electrochemical technology, and more particularly, to a positive electrode plate and an electrochemical device containing the positive electrode plate.

### BACKGROUND

Lithium-ion batteries are widely used in electric vehicles and consumer electronics because of their high energy density, high output power, long cycle life and small environmental pollution. However, lithium-ion batteries are prone to fire and explosion when subjected to abnormal conditions such as crushing, bumping or puncture, causing serious harm. Therefore, the safety problem of lithium-ion batteries greatly limits the application and popularity of lithium-ion batteries.

A large number of experimental results show that internal short circuit of lithium-ion battery is the basic cause of the battery's safety hazard. In order to avoid the internal short-circuit of the battery, researchers have tried to improve the battery in many ways, including the use of PTC materials to improve the safety performance of lithium-ion battery. A PTC (Positive Temperature Coefficient) material is a positive temperature coefficient heat sensitive material, which has the characteristic that its resistivity increases with increasing temperature. When the temperature exceeds a certain temperature, its resistivity increases rapidly stepwise.

In the study of utilizing the characteristics of PTC materials to improve the safety performance of lithium ion battery, some studies involve addition of PTC materials to the electrode active material layer of the battery. When the temperature of the battery rises, the resistance of the PTC material increases, thereby causing the resistance of the entire electrode active material layer to become large, and even making the conductive path of the entire electrode active material layer to be destroyed. Thus the security effect is achieved by causing power interruption and preventing the electrochemical reaction from proceeding. However, with this modification, the PTC material added in the electrode active material layer adversely affects the electrochemical performance of the battery.

Still other studies have provided a separate layer of PTC material (safety coating) between the metal current collector and the electrode active material layer of the battery. When the temperature of the battery rises, the resistance of the PTC material layer increases, so that the electric resistance between the metal current collector and the electrode active material layer is increased or even power supply is interrupted, thereby achieving the security effect of preventing the electrochemical reaction from proceeding. However, with this modification, when the active material slurry is coated on the surface of the PTC material layer, the solvent (such as NMP) in the slurry would dissolve the PTC material of the PTC layer and thus the dissolved PTC material enters the upper active material layer, which not only destroys the PCT effect of the PTC layer and also deteriorates its electrical properties. In addition, in the compacting step of the plate fabrication process, the PTC material layer is easily squeezed to the edge and thus the electrode active material layer would directly contact the metal current collector, so that the PTC material layer cannot improve the safety performance. In addition, it is required to greatly improve the performance of the PTC material layer, such as the response speed, the effect of blocking current, and the like.

EP3483900 discloses an electrode plate including a current collector, a positive electrode active material layer, and a safety coating disposed between the current collector and the electrode active material layer, wherein the safety coating includes a polymer matrix, a conductive material, and an inorganic filler, wherein the polymer matrix is a fluorinated polyolefin and/or chlorinated polyolefin polymer matrix, wherein the weight percentage of the polymer matrix is 35-75 wt%; the weight percentage of the conductive material is 5 to 25 wt%; the weight percentage of the inorganic filler is 10-60 wt% based on the total weight of the safety coating; the average particle diameter D of the inorganic filler is 100 nm to 10 microns. However this document fails to disclose the addition of fluorinated polyolefin and/or chlorinated polyolefin as polymer matrix of safety coating.

CN106898730 discloses a process for preparation of a positive electrode plate and the resulting positive electrode plate in which the electrode plate comprises a current collector, a first coating and a second coating, wherein the first coating comprises a first organic solvent as polar solvent, a first organic polymer as acrylics polymers and Superconducting carbon black and the second coating comprises cathode active materials or anode active materials. However this document fails to disclose the addition of fluorinated polyolefin and/or chlorinated polyolefin as polymer matrix of safety coating.

US2016/0233667 discloses an over-current protection device comprising two metal foils and a PTC material layer laminated between the two metal foils wherein the PTC material layer comprises at least one crystalline polymer being for example polyvinyl chlorine and/or polyvinyl fluoride, a first conductive filler being a carbon black powder; and a second conductive filler comprising at least one of metal powder, conductive ceramic powder or mixture thereof. However this document fails to disclose a positive electrode plate comprising a positive active material layer.

In view of this, it is indeed necessary to provide an electrode plate and a battery having improved safety performance, which are capable of solving the above problems.

### SUMMARY

An object of the present invention is to provide an electrode plate and an electrochemical device with improved safety and electrical performances.

A further object of the present invention is to provide an electrode plate and an electrochemical device with good safety performance, improved electrical performance, easy processing and the like, especially with improved safety performance during nail penetration.

The present invention provides a positive electrode plate comprising a current collector, a positive active material layer and a safety coating disposed between the current collector and the positive active material layer, and wherein the safety coating comprises a polymer matrix, a conductive material and an inorganic filler and when the safety coating and the positive active material layer are collectively referred as a film layer, the film layer has an elongation of 30% or more, wherein the polymer matrix of the safety coating is fluorinated polyolefin and/or chlorinated polyolefin having a crosslinked structure.

The present invention also provides an electrochemical device comprising the positive electrode plate of the present invention, which is preferably a capacitor, a primary battery or a secondary battery.

### DESCRIPTION OF THE DRAWINGS

The positive electrode plate, the electrochemical device and the beneficial effects of the present invention will be described in detail below with reference to the accompanying drawings and specific embodiments.

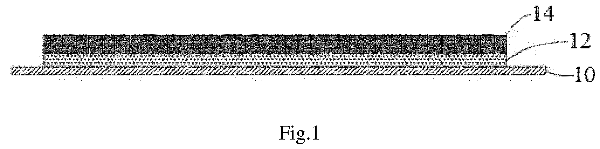

Fig. 1 is a schematic structural view of a positive electrode plate according to an embodiment of the present invention, in which 10 - a current collector; 14 - a positive active material layer; 12 - a safety coating (i.e., PTC safety coating).

### DETAILED DESCRIPTION

It has been found that lithium ion batteries are prone to internal short circuits in the case of abnormalities such as nailing penetration of lithium ion batteries. The reason is basically due to the metal burr generated in the positive current collector under abnormal conditions such as nailing penetration.

According to a first aspect of the present invention, there is provided a positive electrode plate comprising a current collector, a positive active material layer and a safety coating disposed between the current collector and the positive active material layer, wherein the safety coating comprises a polymer matrix, a conductive material and an inorganic filler. When the safety coating and the positive active material layer are collectively referred as a film layer, the film layer has an elongation of 30% or more.

For positive active material layer of the conventional lithium ion battery (i.e., a film layer without a safety coating), its elongation rate is generally not more than 1%, and it cannot function to wrap metal burrs, so bare metal burrs are liable to cause short circuit inside the battery. According to the positive electrode plate of the present invention, the elongation of the film layer is greatly improved due to the introduction of the safety coating, which may wrap the metal burrs that may be generated in the current collector to prevent the occurrence of short circuit in the battery, thereby greatly improving the safety performance of the battery during nail penetration.

The elongation of the film layer can be adjusted by changing the type, relative amount, molecular weight, degree of crosslinking, and the like of the polymer matrix in the safety coating.

The safety coating is described in detail below.

In the present invention, the safety coating comprises a polymer matrix material (PTC matrix material), a conductive material and an inorganic filler.

The safety coating works as below. At a normal temperature, the safety coating relies on a good conductive network formed between the conductive materials to conduct electron conduction. When the temperature rises, the volume of the polymer matrix material begins to expand, the spacing between the particles of the conductive materials increases, and thus the conductive network is partially blocked, so that the resistance of the safety coating increases gradually. When a certain temperature for example the operating temperature is reached, the conductive network is almost completely blocked, and the current approaches zero, thereby protecting the electrochemical device that uses the safety coating.

The conductive material used in the safety coating may be selected from at least one of a conductive carbon-based material, a conductive metal material, and a conductive polymer material, wherein the conductive carbon-based material is selected from at least one of conductive carbon black, acetylene black, graphite, graphene, carbon nanotubes, carbon nanofibers; the conductive metal material is selected from at least one of Al powder, Ni powder, and gold powder; and the conductive polymer material is selected from at least one of conductive polythiophene, conductive polypyrrole, and conductive polyaniline. The conductive materials may be used alone or in combination of two or more.

In the present invention, the weight percentage of the conductive material is from 5 wt% to 25 wt%, preferably from 5 wt% to 20 wt%, based on the total weight of the safety coating. Preferably, the weight ratio of the polymer matrix material to the conductive material is 2 or more. With the ratio, the safety performance during nail penetration can be further improved. If the weight ratio of the polymer matrix material to the conductive material is less than 2, the content of the conductive material is relatively high, and the conductive network may not be sufficiently broken at elevated temperature, thereby affecting the PTC effect. If the weight ratio of the polymer matrix material to the conductive material is too high, the content of the conductive material is relatively low, which causes a large increase in the DCR (DC internal resistance) of the battery at normal operation. Preferably, the weight ratio of the polymer matrix to the conductive material is 3 or more and 8 or less.

Conductive materials are typically used in the form of powders or granules. The particle size may be 5 nm to 500 nm, for example, 10 nm to 300 nm, 15 nm to 200 nm, 15 nm to 100 nm, 20 nm to 400 nm, 20 nm to 150 nm, or the like, depending on the specific application environment.

The weight percentage of the polymer matrix is 35 wt% to 75 wt%, preferably 40 wt% to 75 wt%, and more preferably 50wt% to 75 wt%, based on the total weight of the safety coating.

In the safety coating, the polymer matrix material may be a polyolefin material or other polymer materials such as polyethylene, polypropylene, ethylene-vinyl acetate copolymer (EVA), ethylene-acrylic acid copolymer, ethylene-methacrylic acid copolymer, polyamide, polystyrene, polyacrylonitrile, thermoplastic elastomer, epoxy resin, polyacetal, thermoplastic modified cellulose, polysulfone, polymethyl(meth) acrylate, a copolymer containing (meth)acrylate and the like. In addition, preferably, the safety coating may also contain a binder that promotes binding force between the polymer matrix material and the current collector. The binder may be for example PVDF, PVDC, SBR and the like, and also may be an aqueous binder selected from the group consisting of CMC, polyacrylate, polycarbonate, polyethylene oxide, rubber, polyurethane, sodium carboxymethyl cellulose, polyacrylic acid, acrylonitrile multicomponent copolymer, gelatin, chitosan, sodium alginate, a coupling agent, cyanoacrylate, a polymeric cyclic ether derivative, a hydroxy derivative of cyclodextrin, and the like.

In the conventional coating having PTC effect for use in batteries, polyethylene, polypropylene or ethylene propylene copolymer or the like is generally used as the PTC matrix material. As described above, in this case, it is necessary to additionally add a binder to the PTC matrix material and the conductive material. If the binder content is too small, the binding foce between the coating and the metal current collector is poor, and if the binder content is too large, the response temperature and response speed of the PTC effect are affected. The inventors have found that instead of using a conventional PTC matrix material such as polyethylene, polypropylene or ethylene propylene copolymer, a large amount of fluorinated polyolefin and/or chlorinated polyolefin is used between the metal current collector and the positive active material layer, which can still function as a PTC thermistor layer and can help eliminate the problems faced by existing PTC safety coatings. Therefore, it is more preferable to use a fluorinated polyolefin and/or a chlorinated polyolefin as the polymer base material.

Fluorinated polyolefin and/or chlorinated polyolefin (such as PVDF) is the conventionally common binder. When used as a binder, the amount of PVDF is much less than the amount of the matrix material. For example, the PVDF binder in conventional PTC coatings is typically present in an amount of less than 15% or 10%, or even less, relative to the total weight of the coating. In the present invention, the fluorinated polyolefin and/or chlorinated polyolefin is used as a polymer matrix material, which amount is much higher than the amount of the binder. The weight percentage of the fluorinated polyolefin and/or chlorinated polyolefin as the polymer matrix material is from 35 wt% to 75 wt%, relative to the total weight of the safety coating.

In the present safety coating, the fluorinated polyolefin and/or chlorinated polyolefin material actually functions, both as a PTC matrix and as a binder, which avoids the influence on the adhesion of the coating, the response speed, and the response temperature of the PTC effect due to the difference between the binder and the PTC matrix material.

Firstly, the safety coating composed of fluorinated polyolefin and/or chlorinated polyolefin material and a conductive material can function as a PTC thermistor layer and its operating temperature range is suitably from 80 °C to 160 °C. Thus the high temperature safety performance of the battery may be improved well.

Secondly, fluorinated polyolefin and/or chlorinated polyolefin as the polymer matrix material of the safety coating serves as both a PTC matrix and a binder, thereby facilitating the preparation of a thinner safety coating without affecting the adhesion of the safety coating.

In addition, the solvent (such as NMP or the like) or the electrolyte in the positive active material layer over the safety coating may have an adverse effect such as dissolution, swelling and the like on the polymer material of the safety coating. For the safety coating containing PVDF in a binder amount, the adhesion would be easy to be worse. For the safety coating in which the content of fluorinated polyolefin and/or chlorinated polyolefin is large, the above adverse effect is relatively low.

Therefore as an improvement of one aspect of the present invention, the polymer matrix is preferably fluorinated polyolefin and/or chlorinated polyolefin, i.e. polyvinylidene fluoride (PVDF), polyvinylidene chloride (PVDC), modified PVDF, or modified PVDC. For example, the polymer matrix may be selected from the group consisting of PVDF, carboxylic acid modified PVDF, acrylic acid modified PVDF, PVDF copolymer, PVDC, carboxylic acid modified PVDC, acrylic acid modified PVDC, PVDC copolymer or any mixture thereof.

In a preferred embodiment of the present invention, the weight percentage of the fluorinated polyolefin and/or chlorinated polyolefin polymer matrix is from 35 wt% to 75 wt%, based on the total weight of the safety coating. If the content is too small, the polymer matrix cannot ensure the safety coating works well in terms of its PTC effect; and if the content is too high, it will affect the response speed of the safety coating. The weight percentage of the fluorinated polyolefin and/or chlorinated polyolefin polymer matrix is preferably from 40 wt% to 75 wt%, more preferably from 50 wt% to 75 wt%.

As a further improvement of another aspect of the present invention, the polymer matrix in the safety coating of the positive electrode plate is preferably subjected to crosslinking treatment. That is to say, it is a polymer matrix material having a crosslinked structure, preferably fluorinated polyolefin and/or chlorinated polyolefin having a crosslinked structure.

The crosslinking treatment may be more advantageous for hindering the adverse effects of a solvent (such as NMP or the like) in the positive active material layer or an electrolyte on the polymer material in the safety coating, such as dissolving or swelling and the like, and for preventing the positive active material layer from cracking due to uneven stress.

In addition, the polymer matrix which is not subjected to crosslinking treatment has a large swelling in the electrolyte, so introduction of the safety coating causes a large DCR growth of battery, which is disadvantageous to improvement of the dynamic performance of battery. After being subjected to crosslinking treatment, the swelling ratio of the polymer matrix is effectively suppressed, so that the DCR growth due to introduction of the safety coating can be remarkably reduced.

The procedure of the crosslinking treatment is known in the art. For example, for fluorinated polyolefin and/or chlorinated polyolefin polymer matrix, the crosslinking treatment can be achieved by introducing an activator and a crosslinking agent. The function of the activator is to remove HF or HCl from fluorinated polyolefin and/or chlorinated polyolefin to form a C=C double bond; and the crosslinking agent acts to crosslink the C=C double bond. As an activator, a strong base-weak acid salt such as sodium silicate or potassium silicate can be used. The weight ratio of the activator to the polymer matrix is usually from 0.5% to 5%. The crosslinking agent may be selected from at least one of polyisocyanates (JQ-1, JQ-1E, JQ-2E, JQ-3E, JQ-4, JQ-5, JQ-6, PAPI, emulsifiable MDI, tetraisocyanate), polyamines (propylenediamine, MOCA), polyols (polyethylene glycol, polypropylene glycol, trimethylolpropane), glycidyl ethers (polypropylene glycol glycidyl ether), inorganic substances (zinc oxide, aluminum chloride, aluminum sulfate, sulfur, boric acid, borax, chromium nitrate), organic substances (styrene, α-methylstyrene, acrylonitrile, acrylic acid, methacrylic acid, glyoxal, aziridine), organosilicons (ethyl orthosilicate, methyl orthosilicate, trimethoxysilane), benzenesulfonic acids (p-toluenesulfonic acid, p-toluenesulfonyl chloride), acrylates (1,4-butylene glycol diacrylate, ethylene glycol dimethacrylate, TAC, butyl acrylate, HEA, HPA, HEMA, HPMA, MMA), organic peroxides (dicumyl peroxide, bis(2,4-dichlorobenzoyl) peroxide), and metal organic compounds (aluminum isopropoxide, zinc acetate, titanium acetylacetonate).

The weight ratio of the crosslinking agent to the polymer matrix is from 0.01% to 5%. If the content of crosslinking agent is small, the crosslinking degree of the polymer matrix is low, which cannot eliminate cracking completely. If the content of crosslinking agent is too high, it is easy to cause gel during stirring. The activator and the crosslinking agent may be added after the stirring step of the slurry for preparing the safety coating is completed. After carrying out the crosslinking reaction, the mixture is uniformly stirred and then coated to prepare a safety coating.

The inventors have also found that the addition of inorganic fillers to the safety coating can favorable to overcome the various problems faced by prior PCT safety coatings.

It has been found that in the case that the safety coating does not contain an inorganic filler, the solvent (such as NMP or the like) in the positive active material layer or the electrolyte over the safety coating may adversely dissolve and swell the polymer material in the safety coating, thereby damaging the safety coating and affecting its PTC effect. The inventor found that after adding an inorganic filler to the safety coating, the inorganic filler as a barrier can advantageously eliminate the above-mentioned adverse effects such as dissolution and swelling, and thus it is advantageous for stabilizing the safety coating. In addition, it has also been found that the addition of the inorganic filler is also advantageous for ensuring that the safety coating is not easily deformed during compaction of the electrode plate. Therefore, the addition of the inorganic filler can well ensure that the safety coating is stably disposed between the metal current collector and the positive active material layer and that the metal current collector is prevented from directly contacting the positive active material layer, thereby improving safety performance of the battery.

In summary, the inorganic filler can function as stabilizing the safety coating from the following two aspects: (1) hindering the electrolyte and the solvent (such as NMP, etc.) of the positive active material layer from dissolving or swelling the polymer material of the safety coating; and (2) guaranteeing that the safety coating is not easily deformed during the plate compaction process.

The inventors have also unexpectedly discovered that inorganic fillers can also improve the performance such as the response speed of the safety coating. The safety coating works as below. At normal temperature, the safety coating relies on a good conductive network formed between the conductive materials to conduct electron conduction. When the temperature rises, the volume of the polymer matrix materials begins to expand, the spacing between the particles of the conductive materials increases, and thus the conductive network is partially blocked, so that the resistance of the safety coating increases gradually. When a certain temperature for example the operating temperature is reached, the conductive network is almost completely blocked, and the current approaches zero. However, usually the conductive network is partially recovered, when the inside of the safety coating reaches a dynamic balance. Therefore, after reaching a certain temperature for example, the operating temperature, the resistance of the safety coating is not as large as expected, and still there is very little current flowing through. The inventors have found that after the inorganic filler is added and the volume of the polymer matrix materials expands, the inorganic filler and the expanded polymer matrix material can function to block the conductive network. Therefore, after the addition of the inorganic filler, the safety coating can better produce PTC effect in the operating temperature range. That is to say, the increasing speed of resistance is faster and the PTC response speed is faster at a high temperature. Thus, the safety performance of battery can be improved better.

The inorganic filler is present in a weight percentage of 10 wt% to 60 wt% based on the total weight of the safety coating. If the content of the inorganic filler is too small, it will not be enough to stabilize the safety coating; if the content is too large, it will affect the PTC performance of the safety coating. The weight percentage of the inorganic filler is preferably from 15 wt% to 45 wt%.

The inorganic filler may be selected from at least one of a metal oxide, a non-metal oxide, a metal carbide, a non-metal carbide, and an inorganic salt, or at least one of a conductive carbon coating modified above material, a conductive metal coating modified above material or a conductive polymer coating modified above material. For example, the inorganic filler may be selected from at least one of magnesium oxide, aluminum oxide, titanium dioxide, zirconium oxide, silicon dioxide, silicon carbide, boron carbide, calcium carbonate, aluminum silicate, calcium silicate, potassium titanate, barium sulfate, or at least one of a conductive carbon coating modified above material, a conductive metal coating modified above material or a conductive polymer coating modified above material.

The inventors have further found that it is particularly advantageous when a positive electrochemically active material or a conductive carbon coating modified above material, a conductive metal coating modified above material or a conductive polymer coating modified above material is used as an inorganic filler in the case that the safety coating is used for a positive electrode plate. In such a case, in addition to above mentioned function as stabilizing the binding layer, i.e. hindering organic solvent from dissolving or swelling the polymer material of the binding layer and ensuring that the binding layer is not easily deformed, and as improving the performance such as the response speed and the like of the safety coating, the inorganic filler may further play the following two roles:
(1) to improve the overcharge performance of the battery. In the PTC safety coating system composed of a fluorinated polyolefin and/or chlorinated polyolefin polymer matrix and a conductive material, since the electrochemically active material has the characteristics of lithium ion intercalation, the electrochemically active material can be used as an "active site" in the conductive network at the normal operating temperature of the battery and thus the number of "active site" in the safety coating is increased. In the process of overcharging, the electrochemically active material will delithiate, the delithiating process has become more and more difficult, and the impedance is increasing. Therefore, when the current passes, the heat-generating power increases, and the temperature of the primer layer increases faster, so the PTC effect responds faster, which in turn can generate PTC effects before the overcharge safety problem of battery occurs. Thus the battery overcharge safety performance may be improved.
(2) to contribute charge and discharge capacity. Since the electrochemically active material can contribute a certain charge and discharge capacity at the normal operating temperature of the battery, the effect of the safety coating on the electrochemical performance such as capacity of the battery at the normal operating temperature can be dropped to the lowest.

Therefore, for the positive electrode plate, it is the most preferred to use a positive electrochemically active material or a conductive carbon coating modified above material, a conductive metal coating modified above material or a conductive polymer coating modified above material as the inorganic filler of the safety coating.

The positive electrochemically active material is preferably selected from at least one of lithium cobalt oxide, lithium nickel manganese cobalt oxide, lithium nickel manganese aluminum oxide, lithium iron phosphate, lithium vanadium phosphate, lithium cobalt phosphate, lithium manganese phosphate, lithium iron silicate, lithium vanadium silicate, lithium cobalt silicate, lithium manganese silicate, spinel lithium manganese oxide, spinel lithium nickel manganese oxide, and lithium titanate, or a conductive carbon coating modified above material, a conductive metal coating modified above material, a conductive polymer coating modified above material. Especially, the positive electrochemically active material is at least one of a conductive carbon coating modified above electrochemically active materials, such as conductive carbon coating modified lithium cobalt oxide, conductive carbon coating modified lithium nickel manganese cobalt oxide, conductive carbon coating modified lithium nickel manganese aluminum oxide, conductive carbon coating modified lithium iron phosphate, conductive carbon coating modified lithium vanadium phosphate, conductive carbon coating modified lithium cobalt phosphate, conductive carbon coating modified lithium manganese phosphate, conductive carbon coating modified lithium manganese iron phosphate, conductive carbon coating modified lithium iron silicate, conductive carbon coating modified lithium vanadium silicate, conductive carbon coating modified lithium cobalt silicate, conductive carbon coating modified lithium manganese silicate, conductive carbon coating modified spinel lithium manganese oxide, conductive carbon coating modified spinel lithium nickel manganese oxide, conductive carbon coating modified lithium titanate. These electrochemically active materials and conductive carbon coating modified electrochemically active materials are commonly used materials in the manufacture of lithium batteries, most of which are commercially available. The type of conductive carbon may be graphite, graphene, conductive carbon black, carbon nanotubes or the like. Further, the conductivity of the inorganic filler can be adjusted by adjusting the content of the conductive carbon coating.

When the particle size of the inorganic filler is too small, it will have increased specific surface area and thus side reaction will increase; when the particle size of the inorganic filler is too large, the application thickness of the safety coating is too large and the coating is not easy to be even. Preferably, the average particle diameter D of the inorganic filler in the safety coating fulfils the relationship of 100 nm ≤ D ≤ 10 µm, more preferably 1 µm ≤ D ≤ 6 µm. When the particle size of the inorganic filler is in the above range, it may also improve the effect of blocking the conductive network at high temperature, thereby improving the response speed of the safety coating. Further preferably, the inorganic filler in the safety coating has a specific surface area (BET) of not more than 500 m²/g. When the specific surface area of the inorganic filler increases, side reaction will increase and thus the battery performance will be affected. Moreover, in the case that the specific surface area of the inorganic filler is too large, a higher proportion of binder will be required to be consumed, which will cause the binding force among the safety coating, the current collector and the positive active material layer to be reduced and the growth rate of the internal resistance to be high. When the specific surface area (BET) of the inorganic filler is not more than 500 m²/g, a better overall effect can be provided.

In addition to the polymer matrix, the conductive material, and the inorganic filler, the safety coating may also contain other materials or components, such as other binders that promote adhesion between the coating and the substrate for the metal current collector. Those skilled in the art can select other auxiliaries according to actual needs. For example, in other embodiments of the present invention, the safety coating may also include other binders. In still other embodiments of the present invention, the safety coating may further include other polymer matrix other than the above mentioned polymer matrix. Since fluorinated polyolefin and/or chlorinated polyolefin polymer matrix material used in the safety coating of the present invention itself has a good adhesion, in order to simplify the process and to save the cost, in a preferred embodiment of the present invention, the safety coating layer is substantially free of other binders or other polymer matrixes other than the matrix material in which the phrase "substantially free" means ≤ 3%, ≤ 1%, or ≤ 0.5%.

Moreover, in some preferred embodiments of the present invention in which fluorinated polyolefin and/or chlorinated polyolefin is used as a polymer matrix, the safety coating of the present invention may consist essentially of the polymer matrix, the conductive material, and the inorganic filler, which is free of a significant amounts (e.g., ≤ 3%, ≤ 1%), or ≤ 0.5%) of other components.

The thickness H of the safety coating may be reasonably determined according to actual demand. The thickness H of the safety coating is usually not more than 40 µm, preferably not more than 25 µm, more preferably not more than 20 µm, 15 µm or 10 µm. The coating thickness of the safety coating is usually greater than or equal to 1 µm, preferably greater than or equal to 2 µm, and more preferably greater than or equal to 3 µm. If the thickness is too small, it is not enough to ensure that the safety coating improves the safety performance of the battery; if it is too large, the internal resistance of the battery will increase seriously, which will affect the electrochemical performance of the battery during normal operation. Preferably, it fulfils 1µm≤H≤20µm, more preferably 3µm≤H≤10µm.

Fig.1 shows a schematic structural view of the positive electrode plate according to some embodiments of the present invention, wherein 10 - a metal current collector, 14 - a positive active material layer, 12 - a safety coating (i.e., a PTC safety coating).

It is easily understood that although the positive active material layer is provided only on one side of the positive electrode metal current collector 10 as described in Fig. 1, in other embodiments, the safety coating 12 and the positive active material layer 14 may be provided on both sides of the positive metal current collector 10, respectively.

As the positive active material layer used for the present positive electrode plate of the present invention, various positive active material layers known in the art can be selected, and the constitution and preparation method thereof are well known in the art without any particular limitation. The positive electrode active material layer contains a positive active material, and various positive electrode active materials for preparing a lithium ion secondary battery positive electrode known to those skilled in the art may be used. For example, the positive electrode active material is a lithium-containing composite metal oxide, for example one or more of LiCoO₂, LiNiO₂, LiMn₂O₄, LiFePO₄, lithium nickel cobalt manganese oxide (such as LiNi_{0.5}Co_{0.2}Mn_{0.3}O₂) and one or more of lithium nickel manganese oxide.

The safety coating and the positive active material layer are tightly bonded together after being formed on the current collector respectively, a whole coating will be obtained generally if the coating is peeled off from the current collector. Therefore, the safety coating and the positive active materials are collectively referred to as a film layer.

The inventors have found that the elongation of the film layer of the present invention will greatly improve the safety performance of the battery during nail penetration.

As a further improvement of the present invention, the film layer has an elongation of 30% or more, preferably 80% or more. The advantage of the larger elongation is that in the abnormal situation such as nail penetration, the film layer with larger elongation can wrap metal burrs that may be generated in the current collector to prevent the occurrence of short circuit in the battery, thereby greatly improving the safety performance of the battery during nail penetration. For the conventional positive active material layer, its elongation is generally not more than 1%, and it cannot function to wrap metal burrs. In the present invention, the elongation of the film layer is greatly improved due to the introduction of the safety coating.

If the content of the polymer matrix in the safety coating is increased, it is inevitably beneficial to the elongation of the film layer. However, if the content of the polymer matrix in the safety coating is too large, the content of the conductive material will be relatively low, thereby causing a large increase in DCR of the battery during normal operation. Therefore, it is preferred that the film layer has an elongation of 80% or more and 300% or less.

Preferably, the single side thickness of the film layer is from 30 µm to 80 µm.

Further, the binding force between the film layer and the current collector is preferably 10 N/m or more. Larger binding force can improve the safety performance of the battery during nailing penetration. For example, the binding force between the safety coating and the current collector can be increased by introducing an additional binder or by carrying out crosslinking treatment to the polymer matrix, for example to increase the binding force between the film layer and the current collector.

Further, in consideration of the safety performance during nail penetration, the elongation at break δ of the current collector is preferably 0.8%≤δ≤4%. It was found that if the elongation at break of the current collector is too large, the metal burrs will be larger when puncture, which is not conducive to improving safety performance of the battery. Conversely, if the elongation at break of the current collector is too small, breakage is likely to occur during processing such as plate compaction or when the battery is squeezed or collided, thereby degrading quality or safety performance of the battery. Therefore, in order to further improve safety performance, particularly those during nail penetration, the elongation at break δ of the current collector should be no more than 4% and not less than 0.8%. The elongation at break of the metal current collector can be adjusted by changing purity, impurity content and additives of the metal current collector, the billet production process, the rolling speed, the heat treatment process, and the like.

For the current collector, the common materials in the art, preferably metal current collectors, such as metal flakes or metal foils of stainless steel, aluminum, copper, titanium or the like can be used. Preferably, the current collector is an aluminum-containing porous current collector (for example, a porous aluminum foil). Use of the porous aluminum foil can reduce the probability of occurrence of the metal burrs and further reduce the probability of occurrence of a severe aluminothermic reaction in an abnormal situation such as nailing. Therefore, safety performance of the battery may be further improved. In addition, Use of porous aluminum foil can also improve infiltration of the electrolyte to the electrode plate, and thereby improve the dynamic performance of the lithium ion battery. The safety coating can cover the surface of the porous aluminum foil to prevent leakage of the active material layer during the coating process.

Preferably, the current collector has a thickness of 4µm∼16µm.

Those skilled in the art will appreciate that various definition or preferred ranges of the component selection, component content, and material physicochemical properties (thickness, particle size, specific surface area, elongation at break, etc.) in the various embodiments of the present invention mentioned above can be combined arbitrarily. The combined embodiments are still within the scope of the invention and are considered as part of the disclosure.

The negative electrode plate for use in conjunction with the positive electrode plate of the present invention may be selected from various conventional negative electrode plates in the art, and the constitution and preparation thereof are well known in the art. For example, the negative electrode plate may comprises a negative electrode current collector and a negative active material layer disposed on the negative electrode current collector, and the negative active material layer may comprise a negative active material, a binder, a conductive material, and the like. The negative active material is, for example, a carbonaceous material such as graphite (artificial graphite or natural graphite), conductive carbon black, carbon fiber, or the like, a metal or a semimetal material such as Si, Sn, Ge, Bi, Sn, In, or an alloy thereof, and a lithium-containing nitride or a lithium-containing oxide, a lithium metal or a lithium aluminum alloy.

The present invention also discloses an electrochemical device, comprising the positive electrode plate according to the present invention. The electrochemical device may be a capacitor, a primary battery or a secondary battery, for example a lithium-ion capacitor, a lithium-ion battery or a sodium-ion battery. In addition to the use of the positive electrode plate as described above, the construction and preparation methods of these electrochemical devices are known per se. Due to the use of the positive electrode plate as described above, the electrochemical device can have improved safety (e.g., during nail penetration) and electrical performances. Furthermore, the positive electrode plate according to this application can be easily processed, so that the manufacturing cost of the electrochemical device can be reduced by using the positive electrode plate according to the present invention.

### Examples

In order to make the objects, the technical solutions and the beneficial technical effects of the present invention more clear, the present invention will be described in further detail below with reference to the embodiments. However, it is to be understood that embodiments of the present invention are only intended to be illustrative of the present invention, and are not intended to limit the invention, and embodiments of the present invention are not limited to those embodiments given in the specification. The experimental conditions not indicated in the examples may refer to conventional conditions, or the conditions recommended by the material supplier or equipment supplier.

### 1. Preparation method

### 1.1 Preparation of positive electrode plate

### 1) Safety coating

Depending on whether or not the polymer matrix material in the safety coating is subjected to crosslinking treatment, the safety coating was prepared by one of the following two methods.

For the polymer matrix without cross-linking treatment:
A certain ratio of a polymer matrix material, a conductive material, and an inorganic filler were mixed with N-methyl-2-pyrrolidone (NMP) as a solvent with stirring uniformly, which was then coated on both sides of metal current collector, followed by drying at 85°C to obtain a PTC layer, i.e. a safety coating.

For the polymer matrix with cross-linking treatment:
A certain ratio of a polymer matrix material, a conductive material, and an inorganic filler were mixed with N-methyl-2-pyrrolidone (NMP) as a solvent with stirring uniformly and then an activator (sodium silicate) and a crosslinking agent were added with stirring uniformly. The resulting mixture was then coated on both sides of metal current collector, followed by drying at 85°C to obtain a PTC layer, i.e. a safety coating.

### 2) Positive Active Material Layer

Then, 90 wt% of a positive active material, 5 wt% of SP, and 5 wt% of PVDF were mixed with NMP as a solvent with stirring uniformly, which was then coated on the safety coating of the current collector as prepared according to the above method followed by drying at 85°C to obtain a positive active material layer.

### 3) Work up

Then, the current collector with two layers of positive active material was cold-pressed, then trimmed, cut, and stripped, followed by drying under vacuum at 85°C for 4 hours. After welding, the positive electrode plate meeting the requirements of the secondary battery was obtained.

The main materials used in the specific examples were as follows:
Polymer matrix: PVDF (Manufacturer "Solvay", model 5130), PVDC;
Crosslinking agent: acrylonitrile, tetraisocyanate, polyethylene glycol;
Conductive material (conductive agent): Super-P (TIMCAL, Switzerland, abbreviated as SP);
Inorganic filler: alumina, lithium iron phosphate (abbreviated as LFP), carbon coating modified lithium iron phosphate (abbreviated as LFP/C), carbon coating modified lithium titanate (abbreviated as Li₄Ti₅O₁₂/C);
Current collector: aluminum foil in a thickness of 12µm;
Positive active material: NCM811 (LiNi_{0.8}Co_{0.1}Mn_{0.1}O₂).

The above materials were commonly used materials in the lithium battery industry which may be commercially available from the corresponding suppliers.

### 1.2 Preparation of negative electrode plate

Negative electrode plate was prepared as follows: active material graphite, conductive agent Super-P, thickener CMC, binder SBR were added to deionized water as a solvent at a mass ratio of 96.5:1.0:1.0:1.5 to form an anode slurry; then the slurry was coated on the surface of the negative electrode current collector in the form of copper foil, and dried at 85°C, then trimmed, cut, and stripped, followed by drying under vacuum at 110°C for 4 hours. After welding, the negative electrode plate meeting the requirements of the secondary battery was obtained.

### 1.3 Preparation of electrolyte

Ethylene carbonate (EC), ethyl methyl carbonate (EMC), and diethyl carbonate (DEC) were mixed at a volume ratio of 3:5:2 to obtain a mixed solvent of EC/EMC/DEC, followed by dissolving the fully dried lithium salt LiPF₆ into the mixed organic solvent at a concentration of 1 mol/L to prepare an electrolyte.

### 1.4 Preparation of the battery

A polypropylene film with a thickness of 12 µm was used as a separator, and the positive electrode plate, the separator and the negative electrode plate were stacked in order, so that the separator was sandwiched in between the positive electrode plate and the negative electrode plate, and then the stack was wound into a bare battery core. After vacuum baking at 75°C for 10 h, the electrolyte (prepared as described in "Preparation of electrolyte" above) was injected therein followed by vacuum package and standing for 24 h. After that, the battery core was charged to 4.2 V with a constant current of 0.1 C, and then was charged with a constant voltage of 4.2 V until the current dropped to 0.05C, and then was discharged to 3.0V with a constant current of 0.1C. Above charging and discharging processes were repeated twice. Finally, the battery core was charged to 3.8V with a constant current of 0.1C, thereby completing the preparation of the secondary battery.

### 2. Tests for material performances

In each of the examples and comparative examples, the physical property parameters of the materials were measured by the common method in the art, unless otherwise specified.

Some specific parameters were tested using the following methods.

### 2.1 Particle size

The power sample was dispersed in a dispersing medium (distilled water), which was measured with a Malvern laser particle size analyzer MS2000 for 5 times and averaged in unit of µm.

### 2.2 BET (specific surface area)

The specific surface area of the powder sample of the test material was measured with a Quadrasorb SI specific surface tester for 5 times and averaged in unit of m²/g.

### 2.3 Binding force between film layer and current collector

The electrode plate containing a film layer on both sides of the current collector was cut into a sample to be tested having a width of 2 cm and a length of 15 cm. One side of the sample to be tested was uniformly adhered to a stainless steel plate at 25°C under normal pressure by using 3M double-sided tape. One end of the sample to be tested was fixed on a GOTECH tensile machine, and the film layer of the sample to be tested was stripped from the current collector by using the GOTECH tensile machine, wherein the maximum tensile force was read according to the data diagram of the tensile force and the displacement. The resulting value (in unit N) was divided by 0.02 to calculate the binding force (N/m).

### 2.4 Elongation at break of current collector

Two samples having a length of 200 mm and a width of 15 mm were taken from the current collector. The sample was then mounted on a tensile machine (model AI7000) and the two tests were averaged as the test result. Record the initial length L0, and start the tensile machine, until the sample broke, and read the displacement L1 of the sample at break from the tensile machine. Elongation at break = (L1-L0)/L0 ^{∗} 100%.

### 2.5 Thickness of current collector, thickness of coating and thickness of film layer

Thickness of the current collector was measured by a micrometer at 5 points and averaged.

Thickness of the coating and thickness of the film layer: first measure the thickness of the current collector, and then measure the total thickness of the current collector with the coating. The difference between the two values was used as the thickness of the coating. A similar method was used for the thickness of the film layer.

### 2.6 Cracking of coating

After drying and obtaining a positive active material layer, if no cracks were observed in the 100 m² electrode plate, it was defined as no cracking; if the number of occurrences of cracks in 100 m² electrode plate was ≤ 3, it was defined as mild cracking; if the number of occurrences of cracks in 100 m² electrode plate was >3, it was defined as severe cracking.

### 2.7 Elongation of film layer

Removal of the current collector from the electrode plate: take the positive electrode plate out of the battery core and add the electrolyte, so that the electrode plate was completely immersed in the electrolyte, which was stored at 90 °C for more than 48h, and then taken out. After that, the film layer of the positive electrode plate can be peeled off from the current collector.

The resulting film layer was used to prepare a sample having a width of 20 mm and a length of 50 mm. The sample was then mounted on a tensile machine (model AI7000) and the initial length L0 was recorded. Start the tensile test until the sample breaks. The displacement L1 of the sample at break was read from the tensile machine. The elongation = (L1-L0) / L0 ^{∗} 100%.

### 3. Test for battery performance

The safety performances of the secondary batteries from various examples and comparative examples were evaluated using GBT31485-2015 "Safety Requirements and Test Methods for Traction Battery of Electric Vehicle", and the test results were recorded.

### 3.1 Puncture test:

The secondary battery was fully charged to the charging cut-off voltage with a current of 1 C, and then charged with a constant voltage until the current dropped to 0.05 C. After that, charging was terminated. A high temperature resistant steel needle of ϕ5-10mm (the tip thereof had a cone angle of 45°) was used to puncture the battery plate at a speed of 25mm/s in the direction perpendicular to the battery plate. The puncture position should be close to the geometric center of the surface to be punctured, the steel needle stayed in the battery, and then observe if the battery had an indication of burning or exploding.

### 3.2 Overcharge test:

The secondary battery was fully charged to the charging cut-off voltage with a current of 1 C, and then charged with a constant voltage until the current dropped to 0.05 C. After that, charging was terminated. Then, after charging with a constant current of 1 C to reach 1.5 times the charging cut-off voltage or after charging with a constant current of 1 C for 1 hour, the charging was terminated.

### 3.3 Cycle performance test:

The test conditions for the cycle performance test were as follows: the secondary battery was subjected to a 1C/1C cycle test at 25°C in which the charging and discharging voltage range was 2.8 to 4.2 V. The test was terminated when the capacity was attenuated to 80% of the first discharging specific capacity.

### 3.4 PTC effect test

The secondary battery was fully charged to the charging cut-off voltage with a current of 1 C, and then charged with a constant voltage until the current was reduced to 0.05 C. After that, the charging was terminated and the DC resistance of the battery core was tested (discharging with a current of 4 C for 10 s). Then, the battery core was placed at 130°C for 1 h followed by testing the DC resistance, and calculating the DC resistance growth rate. Then, the battery core was placed at 130°C for 2 h followed by testing the DC resistance, and calculating the DC resistance growth rate.

### 3.5 DCR test

The secondary battery was adjusted to 50% SOC with a current of 1 C at 25°C, and the voltage U1 was recorded. Then, it was discharged with a current of 4 C for 30 seconds, and the voltage U2 was recorded. DCR = (U1-U2)/4C.

In the present invention, for convenience of comparison, the DCR of the battery core in which the polymer material only containing uncrosslinked PVDF was used as a control, and was recorded as 100%, and the DCR of the other battery cores and the ratio thereof were calculated and recorded.

### 4. Performance test results

In order to study the effect of elongation of the film flayer on the performance of the electrode plate and battery, the corresponding positive electrode plate, negative electrode plate and battery were prepared with the specific materials and amounts listed in Table 1-1 below according to the methods and procedures described in "1. Preparation method", and were tested according to the method specified in "3. Tests for battery performance" in which the elongation of the film layer is adjusted by changing the relatively amount of the polymer matrix, the conductive material and the inorganic filler in the safety coating.

In order to ensure accuracy of data, 4 samples were prepared for each battery (10 samples for the puncture test) and tested independently. The final test results were averaged and shown in Table 1-2.

In the test, the conventional electrode plate CPlate P was prepared with the method described in "1.1 Preparation of positive electrode plate", but the safety coating was not provided. That is to say, a positive active material was directly applied over the current collector. The conventional electrode plate Cplate N was prepared according to the method described in "1.2 Preparation of negative electrode plate".

**Table1-1: Compositions of electrode plate and materials' properties**

| | Current collector | Positive active material | Composition of safety coating | | | | | | | | | Elongation of film layer |
|---|---|---|---|---|---|---|---|---|---|---|---|---|
| | | | Polymer matrix | | Conductive material | | Inorganic filler | | Crosslinking agent | | Thickness H of safety coating (µm) | |
| | | | Material | wt% | Material | wt% | Material | wt% | kind | wt% relative to polymer matrix | | |
| CPlate P | Al foil | NCM811 | / | / | / | / | / | / | / | / | / | 0.7% |
| Plate 2-11 | Al foil | NCM811 | uncrosslinked PVDF | 5 | SP | 25 | LFP/C | 70 | No | 0 | 8 | 10% |
| Plate 2-12 | Al foil | NCM811 | crosslinked PVDF | 10 | SP | 20 | LFP/C | 70 | Acrylonitrile | 1.5% | 8 | 30% |
| Plate 2-13 | Al foil | NCM811 | crosslinked PVDF | 15 | SP | 15 | LFP/C | 70 | Acrylonitrile | 1.5% | 8 | 50% |
| Plate 2-14 | Al foil | NCM811 | uncrosslinked PVDF | 30 | SP | 30 | LFP/C | 40 | No | 0 | 8 | 100% |
| Plate 2-15 | Al foil | NCM811 | uncrosslinked PVDF | 45 | SP | 15 | LFP/C | 40 | No | 0 | 8 | 300% |
| Plate 2-16 | Al foil | NCM811 | uncrosslinked PVDF | 50 | SP | 20 | LFP/C | 30 | No | 0 | 8 | 350% |

| | | | | | | | | | | | | |
|---|---|---|---|---|---|---|---|---|---|---|---|---|
| Plates 2-11 and 2-14 to 2-16 are not according to the present invention. | | | | | | | | | | | | |

**Table 1-2: Performances of lithium-ion batteries**

| Battery No. | Positive electrode plate | Negative electrode plate | Puncture Test (20 samples) |
|---|---|---|---|
| Battery 1 | CPlate P | CPlate N | 0 pass |
| Battery 61 | Plate 2-11 | CPlate N | 1 pass, 9 no pass |
| Battery 62 | Plate 2-12 | CPlate N | 6 pass, 4 no pass |
| Battery 63 | Plate 2-13 | CPlate N | 8 pass, 2 no pass |
| Battery 64 | Plate 2-14 | CPlate N | 10 pass |
| Battery 65 | Plate 2-15 | CPlate N | 10 pass |
| Battery 66 | Plate 2-16 | CPlate N | 10 pass |

The data in Table 1-1 and Table 1-2 show that the elongation of the film layer has a certain influence on the performance and safety of the electrode plate and the battery. As the elongation of the film layer increases, the safety performance of the battery during nail penetration can be improved and increased to different extent. When the elongation is less than 30%, the safety coating of the positive electrode plate of the present invention is insufficient to cover the current collector burr caused by nailing penetration, and therefore cannot pass the puncture test; and when the elongation is >300%, a higher ratio of polymer matrix to conductive material is required, which causes a sharp deterioration in battery cycle performance. Therefore, from the viewpoint of safety and stability performance, the film layer has an elongation of ≥ 30%, and further preferably satisfies: 30% ≤ elongation ≤ 300%.

The following experiment further investigated that effect of other components of the film layer (especially the safety coating) on the performance of the electrode plate and electrochemical device.

### 4.1 Protection Performance (PTC effect) of safety coating and effect thereof on battery performance

In order to confirm the protection performance of safety coating, the corresponding safety coating, positive electrode plate, negative electrode plate and battery were prepared with the specific materials and amounts listed in Table 2-1 below according to the methods and procedures described in "1. Preparation method", and were tested according to the method specified in "3. Tests for battery performance". In order to ensure accuracy of data, 4 samples were prepared for each battery (10 samples for the puncture test and overcharge test) and tested independently. The final test results were averaged and shown in Table 2-2 and 2-3.

**Table 2-1: Compositions of electrode plate**

| | Current collector | positive active material | Composition of the safety coating | | | | | | |
|---|---|---|---|---|---|---|---|---|---|
| | | | polymer material | | conductive material | | Inorganic filler | | Thickness of safety coating H (µm) |
| | | | material | wt% | material | wt% | material | wt% | |
| CPlate P | Al foil | NCM811 | / | / | / | / | / | / | / |
| Comp. Plate CP | Al foil | NCM811 | Uncrosslinked PVDF | 90 | SP | 10 | / | / | 20 |
| Plate 1 | Al foil | NCM811 | Uncrosslinked PVDF | 35 | SP | 10 | alumina | 55 | 10 |
| Plate 2 | Al foil | NCM811 | Uncrosslinked PVDF | 35 | SP | 10 | LFP | 55 | 3 |
| Plates 1-2 are not according to the present invention. | | | | | | | | | |

**Table 2-2: Performances of lithium-ion batteries**

| Battery No. | Positive electrode plate | Negative electrode plate | Puncture Test |
|---|---|---|---|
| Battery 1 | CPlate P | CPlate N | 0 pass |
| Battery 2 | Comp. Plate CP | CPlate N | 2 pass, 8 no pass |
| Battery 3 | Plate 1 | CPlate N | 10 pass |
| Battery 4 | Plate 2 | CPlate N | 10 pass |

**Table 2-3: Performances of lithium-ion batteries**

| Battery No. | Positive electrode plate | Negative electrode plate | Growth of DCR (130°C, 1h) | Growth of DCR (130°C, 2h) |
|---|---|---|---|---|
| Battery 2 | Comp. Plate CP | CPlate N | 20% | 30% |
| Battery 4 | Plate 2 | CPlate N | 1200% | 1500% |

The data in Table 2-1 and Table 2-2 indicated that the safety coating with PVDF or PVDC as a polymer matrix can significantly improve the safety performance of the battery during nail penetration, especially in the case that an inorganic filler is added. The growth of DCR data in Table 2-3 indicated that the safety coating composed of PVDF and a conductive material does have a PTC effect, and the addition of the inorganic filler can significantly improve the DCR growth of the battery at a high temperature, that is, the PTC effect is more remarkable.

### 4.2 Effect of the content of each component contained in the safety coating

In order to further study the effect of the content of each component contained in the safety coating, the corresponding safety coating, positive electrode plate, negative electrode plate and battery were prepared with the specific materials and amounts listed in Table 3-1 below according to the methods and procedures described in "1. Preparation method", and then were tested according to the method specified in "3. Test for battery performance". In order to ensure the accuracy of data, 4 samples were prepared for each battery (10 samples for the puncture test or overcharge test) and tested independently. The final test results were averaged and shown in Table 3-2.

**Table 3-1: Compositions of electrode plate**

| | Current collector | positive active material | Composition of the safety coating | | | | | | |
|---|---|---|---|---|---|---|---|---|---|
| | | | polymer matrix | | conductive material | | Inorganic filler | | Thickness of safety coating H (µm) |
| | | | material | wt% | material | wt% | material | wt% | |
| Comp. Plate2-1 | Al foil | NCM811 | Uncrosslinked PVDF | 75 | SP | 20 | alumina | 5 | 8 |
| Plate2-2 | Al foil | NCM811 | Uncrosslinked PVDF | 75 | SP | 15 | alumina | 10 | 8 |
| Plate2-3 | Al foil | NCM811 | Uncrosslinked PVDF | 75 | SP | 10 | alumina | 15 | 8 |
| Plate2-4 | Al foil | NCM811 | Uncrosslinked PVDF | 60 | SP | 10 | alumina | 30 | 8 |
| Plate2-5 | Al foil | NCM811 | Uncrosslinked PVDF | 60 | SP | 8 | alumina | 32 | 8 |
| Plate2-6 | Al foil | NCM811 | Uncrosslinked PVDF | 55 | SP | 15 | alumina | 30 | 8 |
| Plate2-7 | Al foil | NCM811 | Uncrosslinked PVDF | 50 | SP | 25 | alumina | 25 | 8 |
| Plate2-8 | Al foil | NCM811 | Uncrosslinked PVDF | 40 | SP | 15 | alumina | 45 | 8 |
| Plate2-9 | Al foil | NCM811 | Uncrosslinked PVDF | 35 | SP | 5 | alumina | 60 | 8 |
| Plates 2-2 to 2-9 are not according to the present invention. | | | | | | | | | |

**Table 3-2: Performance of lithium-ion batteries**

| Battery | Positive electrode | Negative electrode | Puncture Test | Cycle Life (cycle) |
|---|---|---|---|---|
| Battery 6 | Comp. Plate 2-1 | CPlate N | 5 pass | 2502 |
| Battery 7 | Plate 2-2 | CPlate N | 10 pass | 2351 |
| Battery 8 | Plate 2-3 | CPlate N | 10 pass | 2205 |
| Battery 9 | Plate 2-4 | CPlate N | 10 pass | 2251 |
| Battery 10 | Plate 2-5 | CPlate N | 10 pass | 2000 |
| Battery 11 | Plate 2-6 | CPlate N | 10 pass | 2408 |
| Battery 12 | Plate 2-7 | CPlate N | 10 pass | 2707 |
| Battery 13 | Plate 2-8 | CPlate N | 10 pass | 2355 |
| Battery 14 | Plate 2-9 | CPlate N | 10 pass | 1800 |

The data in Table 3-1 and Table 3-2 show that: (1) If the content of the inorganic filler is too low, the stability of the safety coating is not high, so safety performance of the battery cannot be fully improved; if the content of the inorganic filler is too high, the content of the polymer matrix is too low, so that the safety coating cannot exert its effect; (2) the conductive material has a great influence on the internal resistance and polarization of the battery, so it would affect the cycle life of the battery. The higher the content of the conductive material, the smaller the internal resistance and polarization of the battery is so that the cycle life will be better.

It had been found through experiments that the appropriate content range of each component in the safety coating is as follows:
the weight percentage of the polymer matrix is 35 wt% to 75 wt%;
the weight percentage of the conductive material is 5 wt% to 25 wt%; and
the weight percentage of the inorganic filler is from 10 wt% to 60 wt%.

As long as the content of each component in the safety coating is within the above range, the effect of improving the safety and electrical performance (e.g., cycle performance) of the battery can be achieved.

### 4.3 Effect of the kind of the inorganic filler on battery performance

In order to further study the effect of materials in the safety coating on performances of the electrode plate and the battery, the corresponding safety coating, positive electrode plate, negative electrode plate and battery were prepared with the specific materials and amounts listed in Table 4-1 below according to the methods and procedures described in "1. Preparation method", and were tested according to the method specified in "3. Test for battery performance". In order to ensure accuracy of data, 4 samples were prepared for each battery (10 samples for the puncture test or overcharge test) and tested independently. The final test results were averaged which were shown in Table 4-2.

**Table 4-1: Compositions of electrode plate**

| | Current collector | positive active material | Composition of the safety coating | | | | | | | |
|---|---|---|---|---|---|---|---|---|---|---|
| | | | polymer matrix | | conductive material | | Inorganic filler | | | Thickness of safety coating H (µm) |
| | | | material | wt% | material | wt% | material | wt% | Carbon Content | |
| Plate2-41 | Al foil | NCM811 | Uncrosslinked PVDF | 60 | SP | 10 | alumina | 30 | / | 8 |
| Plate2-42 | Al foil | NCM811 | Uncrosslinked PVDF | 60 | SP | 10 | LFP | 30 | / | 8 |
| Plate2-43 | Alfoil | NCM811 | Uncrosslinked PVDF | 60 | SP | 10 | LFP/C | 30 | 1 | 8 |
| Plate2-44 | Al foil | NCM811 | Uncrosslinked PVDF | 60 | SP | 10 | LFP/C | 30 | 2 | 8 |
| Plate2-45 | Al foil | NCM811 | Uncrosslinked PVDF | 60 | SP | 10 | LFP/C | 30 | 3 | 8 |
| Plate2-46 | Al foil | NCM811 | Uncrosslinked PVDF | 60 | SP | 10 | Li₄Ti₅O₁₂ /C | 30 | 5 | 8 |
| Plates 2-41 to 2-46 are not according to the present invention. | | | | | | | | | | |

**Table 4-2: Performances of lithium-ion batteries**

| Battery | Positive electrode | Negative electrode | Puncture Test | Overcharge Test | Cycle test (cycle) |
|---|---|---|---|---|---|
| Battery 46 | Plate2-41 | CPlate N | 10 pass | No pass | 2200 |
| Battery 47 | Plate2-42 | CPlate N | 10 pass | 10 pass | 2300 |
| Battery 48 | Plate2-43 | CPlate N | 10 pass | 10 pass | 2500 |
| Battery 49 | Plate2-44 | CPlate N | 10 pass | 10 pass | 2700 |
| Battery 50 | Plate2-45 | CPlate N | 10 pass | 10 pass | 2900 |
| Battery 51 | Plate2-46 | CPlate N | 10 pass | 10 pass | 3000 |

The data in Tables 4-1 and 4-2 show that compared to other materials (such as alumina), the electrochemically active material can significantly improve the overcharge safety performance of the battery. In addition, carbon coating modified electrochemically active material also can improve the cycle life of the battery.

### 4.4 Effect of crosslinking on battery performance

The corresponding safety coating, positive electrode plate, negative electrode plate and battery were prepared with the specific materials and amounts listed in Table 5-1 below according to the methods and procedures described above, and were tested according to the specified method to study the effect of the crosslinking on coating cracking and DCR, the results were shown in Table 5-2.

**Table 5-1: Effect of crosslinking agent**

| | Current collector | positive active material | Composition of the safety coating | | | | | | | | | Cracking (coating speed 50m/min) |
|---|---|---|---|---|---|---|---|---|---|---|---|---|
| | | | polymer matrix | | The first conductive material | | The first positive active material | | Crosslinking agent | | Thickness of the underlying layer H (µm) | |
| | | | material | wt% | material | wt% | material | wt% | type | Ratio to the polymer material | | |
| Plate 2-51 | Al foil | NCM811 | Uncrosslinked PVDF | 60 | SP | 10 | LFP/C | 30 | No | 0 | 8 | Severe cracking |
| Plate 2-52 | Al foil | NCM811 | Crosslinked PVDF | 60 | SP | 10 | LFP/C | 30 | Acrylonitrile | 0.01% | 8 | Mild cracking |
| Plate 2-53 | Al foil | NCM811 | Crosslinked PVDF | 60 | SP | 10 | LFP/C | 30 | Tetraisocyanate | 0.1% | 8 | No cracking |
| Plate 2-54 | Al foil | NCM811 | Crosslinked PVDF | 60 | SP | 10 | LFP/C | 30 | Polyethylene glycol | 0.5% | 8 | No cracking |
| Plate 2-55 | Al foil | NCM811 | Crosslinked PVDF | 60 | SP | 10 | LFP/C | 30 | Acrylonitrile | 1.5% | 8 | No cracking |
| Plate 2-56 | Al foil | NCM811 | Crosslinked PVDF | 60 | SP | 10 | LFP/C | 30 | Acrylonitrile | 5% | 8 | No cracking |
| Plate 2-57 | Al foil | NCM811 | Uncrosslinked PVDC | 60 | SP | 10 | LFP/C | 30 | No | No | 8 | Severe cracking |
| Plate 2-58 | Al foil | NCM811 | Crosslinked PVDC | 60 | SP | 10 | LFP/C | 30 | Acrylonitrile | 3% | 8 | No cracking |
| Plates 2-51 and 2-57 are not according to the present invention. | | | | | | | | | | | | |

In the case where the coating speed of the positive active material layer was 50 m/min, the polymer matrix of the electrode plate 2-51 was not crosslinked by adding a crosslinking agent, and thus there was a severe cracking on the electrode plate. The addition of a crosslinking agent had a significant effect on improving the cracking of the electrode plate. No cracking occurred in the electrode plate 2-53 to the electrode plate 2-56. Similar experiments were performed for PVDC (electrode plates 2-57 and 2-58) and the results were similar. It can be seen that the addition of the crosslinking agent can significantly eliminate the coating cracking of the electrode plate.

**Table 5-2: Performance of lithium-ion battery**

| Battery | Positive electrode | Negative electrode | DCR of the battery | Puncture Test |
|---|---|---|---|---|
| Battery 52 | Plate 2-51 | CPlate N | 100% | 10 pass |
| Battery 53 | Plate 2-52 | CPlate N | 80% | 10 pass |
| Battery 54 | Plate 2-53 | CPlate N | 85% | 10 pass |
| Battery 55 | Plate 2-54 | CPlate N | 78% | 10 pass |
| Battery 56 | Plate 2-55 | CPlate N | 75% | 10 pass |
| Battery 57 | Plate 2-56 | CPlate N | 84% | 10 pass |

For the electrode plate 2-51, the polymer matrix was not crosslinked by adding a crosslinking agent, and thus the polymer matrix was swelled greatly in the electrolyte, resulting in a large DCR. The addition of the crosslinking agent can reduce the swelling of the polymer matrix in the electrolyte, and had a significant effect on reducing DCR. It can be seen that the addition of the crosslinking agent can significantly reduce the DCR of the battery.

In addition, the above data indicated that PVDF/PVDC can be used as the polymer matrix of PTC layer regardless of crosslinking, and the obtained battery had high safety performance in which the test result of puncture test is excellent, which indicated that the crosslinking treatment did not adversely affect the protective effect of the safety coating. Furthermore, compared with the uncrosslinked PVDC/PVDF, the crosslinking treatment improved the cracking of the electrode plate, from severe cracking to no cracking or mild cracking. The crosslinking treatment can reduce the swelling of the polymer matrix in the electrolyte, thereby reducing the DCR by 15% to 25%, thereby improving the electrical properties of the battery

It will be understood by those skilled in the art that the above application examples of the electrode plate of the present invention are only exemplified to be used for a lithium battery, but the electrode plate of the present invention can also be applied to other types of batteries or electrochemical devices, and still may produce good technical effect of the present invention.

It will be apparent to those skilled in the art that the present application may be modified and varied in accordance with the above teachings. Accordingly, the present application is not limited to the specific embodiments disclosed and described above, and modifications and variations of the present application are intended to be included within the scope of the claims of the present application. In addition, although some specific terminology is used in this specification, these terms are for convenience of illustration only and are not intended to limit the present application in any way.

## Claims

1. A positive electrode plate comprising a current collector, a positive active material layer and a safety coating disposed between the current collector and the positive active material layer, and wherein the safety coating comprises a polymer matrix, a conductive material and an inorganic filler and wherein when the safety coating and the positive active material layer are collectively referred as a film layer, the film layer has an elongation of 30% or more and wherein the polymer matrix of the safety coating is fluorinated polyolefin and/or chlorinated polyolefin having a crosslinked structure, wherein the elongation is determined according to the teaching of the description.

2. The positive electrode plate as claimed in claim 1, wherein the polymer matrix of the safety coating is fluorinated polyolefin and/or chlorinated polyolefin, which is selected from at least one of polyvinylidene fluoride (PVDF), carboxylic acid modified PVDF, acrylic acid modified PVDF, polyvinylidene chloride (PVDC), carboxylic acid modified PVDC, acrylic acid modified PVDC, PVDF copolymer, PVDC copolymer.

3. The positive electrode plate as claimed in any of claims 1 to 2, wherein the conductive material is selected from at least one of a conductive carbon-based material, a conductive metal material, and a conductive polymer material,
wherein the conductive carbon-based material is selected from at least one of conductive carbon black, acetylene black, graphite, graphene, carbon nanotubes, carbon nanofibers;
the conductive metal material is selected from at least one of Al powder, Ni powder, and gold powder; and
the conductive polymer material is selected from at least one of conductive polythiophene, conductive polypyrrole, and conductive polyaniline.

4. The positive electrode plate as claimed in any of claims 1 to 3, wherein the inorganic filler is selected from at least one of a metal oxide, a non-metal oxide, a metal carbide, a non-metal carbide, and an inorganic salt, or at least one of a conductive carbon coating modified above material, a conductive metal coating modified above material or a conductive polymer coating modified above material;
Preferably, the inorganic filler of the safety coating is at least one of magnesium oxide, aluminum oxide, titanium dioxide, zirconium oxide, silicon dioxide, silicon carbide, boron carbide, calcium carbonate, aluminum silicate, calcium silicate, potassium titanate, barium sulfate, lithium cobalt oxide, lithium nickel manganese cobalt oxide, lithium nickel manganese aluminum oxide, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicatc, spinel lithium manganese oxide, spinel lithium nickel manganese oxide, and lithium titanate, or a conductive carbon coating modified above material, a conductive metal coating modified above material, a conductive polymer coating modified above material or at least one of a conductive carbon coating modified above material, a conductive metal coating modified above material or a conductive polymer coating modified above material;
preferably the inorganic filler has an average particle diameter D of 100 nm ≤ D ≤ 10 µm, and
preferably the inorganic filler has a specific surface area (BET) of not more than 500 m²/g, wherein the average particle diameter D and the specific surface area (BET) are determined according to the description.

5. The positive electrode plate as claimed in any one of claims 1 to 4, wherein in the safety coating, relative to the total weight of the inorganic filler, the polymer matrix and the conductive filler,
the inorganic filler is present in an amount of 35 wt% to 75 wt%;
the conductive material is present in an amount of 5 wt% to 25 wt%; and
the inorganic filler is present in an amount of from 10 wt% to 60 wt%;
preferably, the weight ratio of the polymer matrix to the conductive material is 3 or more and 8 or less.

6. The positive electrode plate as claimed in any one of claims 1 to 6, wherein the current collector is a metal current collector and the current collector has an elongation at breakδ that fulfills 0.8%≤δ≤4%; preferably the current collector is a porous current collector, wherein the elongation at breakδ is determined according to the description.

7. The positive electrode plate as claimed in any of claims 1 to 6, wherein the film layer has an elongation of 80% or more, preferably of 80% or more and 300% or 1 less, wherein the elongation is determined according to the description; preferably, the film layer has a single side thickness of 30µm∼80µm.

8. The positive electrode plate as claimed in any of claims 1 to 7, wherein there is a binding force between the film layer and the current collector of 10 N/m or more, wherein the binding force is determined according to the description.

9. An electrochemical device comprising the positive electrode plate as claimed in any one of claims 1 to 8, which is a capacitor, a primary battery or a secondary battery.

## Patentansprüche

1. Positive Elektrodenplatte, umfassend einen Stromabnehmer, eine positive aktive Materialschicht und eine zwischen dem Stromabnehmer und der positiven aktiven Materialschicht angeordnete Sicherheitsbeschichtung, und wobei die Sicherheitsbeschichtung eine Polymermatrix, ein leitendes Material und einen anorganischen Füllstoff umfasst und wobei, wenn die Sicherheitsbeschichtung und die positive aktive Materialschicht zusammen als Filmschicht bezeichnet werden, die Filmschicht eine Dehnung von 30% oder mehr aufweist und wobei die Polymermatrix der Sicherheitsbeschichtung fluorierten Polyolefin und/oder chlorierten Polyolefin mit einer Vernetzung Struktur hat, wobei die Drehung nach den Lehren der Beschreibung bestimmt wird.

2. Positive Elektrodenplatte nach Anspruch 1, wobei die Polymermatrix der Sicherheitsbeschichtung fluorierter Polyolefin und/oder chlorierter Polyolefin ist, ausgewählt aus mindestens einem von Polyvinylidenfluorid (PVDF), Carbonsäure-modifiziertem PVDF, Acrylsäure-modifiziertem PVDF, Polyvinylidenchlorid (PVDC), Carbonsäure-modifiziertem PVDC, Acrylsäure-modifiziertem PVDC, PVDF-Copolymer, PVDC-Copolymer.

3. Positive Elektrodenplatte nach einem der Ansprüche 1 bis 2, wobei das leitende Material aus mindestens einem von einem leitenden Material auf Kohlenstoffbasis, einem leitenden Metallmaterial und einem leitenden Polymermaterial ausgewählt ist;
wobei das leitende Material auf Kohlenstoffbasis aus mindestens einem von leitendem Ruß, Acetylenruß, Graphit, Graphen, Kohlenstoffnanoröhren, Kohlenstoffnanofasern ausgewählt ist;
das leitende Metallmaterial aus mindestens einem von Al-Pulver, Ni-Pulver und Goldpulver ausgewählt ist; und
das leitende Polymermaterial aus mindestens einem von leitendem Polythiophen, leitendem Polypyrrol und leitendem Polyanilin ausgewählt ist.

4. Positive Elektrodenplatte nach einem der Ansprüche 1 bis 3, wobei der anorganische Füllstoff aus mindestens einem von einem Metalloxid, einem Nichtmetalloxid, einem Metallcarbid, einem Nichtmetallcarbid und einem anorganischen Salz oder mindestens einem von einem obigen Material mit modifizierter leitender Kohlenstoffbeschichtung, einem obigen Material mit modifizierter leitender Metallbeschichtung, oder einem obigen Material mit modifizierter leitender Polymerbeschichtung;
Vorzugsweise der anorganische Füllstoff der Sicherheitsbeschichtung mindestens eines aus Magnesiumoxid, Aluminiumoxid, Titandioxid, Zirkonoxid, Siliziumdioxid, Siliziumcarbid, Borcarbid, Calciumcarbonat, Aluminiumsilikat, Calciumsilikat, Kaliumtitanat, Bariumsulfat, Lithiumkobaltoxid, Lithiumnickelmangankobaltoxid, Lithiumnickelmanganaluminiumoxid, Lithiumeisenphosphat, Lithiumvanadiumphosphat, Lithiumkobaltphosphat, Lithiummanganphosphat, Lithiummanganeisenphosphat, Lithiumeisensilikat, Lithiumvanadiumsilikat, Lithiumkobaltsilikat, Lithiummangansilikat, Spinellithiummanganoxid, Spinellithiumnickelmanganoxid und Lithiumtitanat oder einem obigen Material mit modifizierter leitender Kohlenstoffbeschichtung, einem obigen Material mit modifizierter leitender Metallbeschichtung, einem obigen Material mit modifizierter leitender Polymerbeschichtung oder mindestens eines aus einem obigen Material mit modifizierter leitender Kohlenstoffbeschichtung, einem obigen Material mit modifizierter leitender Metallbeschichtung, einem obigen Material mit modifizierter leitender Polymerbeschichtung ist;
vorzugsweise der anorganische Füllstoff einen durchschnittlichen Teilchendurchmesser D von 100 nm ≤ D ≤ 10 µm aufweist, und
vorzugsweise der anorganische Füllstoff eine spezifische Oberfläche (BET) von nicht mehr als 500 m²/g aufweist, wobei der durchschnittliche Teilchendurchmesser D und die spezifische Oberfläche (BET) nach den Lehren der Beschreibung bestimmt werden.

5. Positive Elektrodenplatte nach einem der Ansprüche 1 bis 4, wobei in der Sicherheitsbeschichtung, bezogen auf das Gesamtgewicht des anorganischen Füllstoffs, der Polymermatrix und des leitenden Füllstoffs,
der anorganische Füllstoff in einer Menge von 35 Gew .-% bis 75 Gew .-% vorliegt; das leitende Material in einer Menge von 5 Gew .-% bis 25 Gew .-% vorliegt; und der anorganische Füllstoff in einer Menge von 10 Gew .-% bis 60 Gew .-% vorliegt; vorzugsweise das Gewichtsverhältnis der Polymermatrix zum leitenden Material 3 oder mehr und 8 oder weniger beträgt.

6. Positive Elektrodenplatte nach einem der Ansprüche 1 bis 6, wobei der Stromabnehmer ein Metallstromabnehmer ist und der Stromabnehmer eine Bruchdehnung δ aufweist, die 0,8%≤ δ ≤4% erfüllt; vorzugsweise der Stromabnehmer ein poröser Stromabnehmer ist, wobei die Bruchdehnung δ nach den Lehren der Beschreibung bestimmt wird.

7. Positive Elektrodenplatte nach einem der Ansprüche 1 bis 6, wobei die Filmschicht eine Dehnung von 80% oder mehr, vorzugsweise von 80% oder mehr und 300% oder weniger aufweist; wobei die Dehnung δ nach den Lehren der Beschreibung bestimmt wird; vorzugsweise die Filmschicht eine einseitige Dicke von 30 µm^{∼}80 µm aufweist.

8. Positive Elektrodenplatte nach einem der Ansprüche 1 bis 7, wobei zwischen der Filmschicht und dem Stromabnehmer eine Bindungskraft von 10 N/m oder mehr besteht, wobei die Bindungskraft nach den Lehren der Beschreibung bestimmt wird.

9. Elektrochemische Vorrichtung, umfassend die positive Elektrodenplatte nach einem der Ansprüche 1 bis 8, die elektrochemische Vorrichtung ein Kondensator, eine Primärbatterie oder eine Sekundärbatterie ist.

## Revendications

1. Plaque d'électrode positive comprenant un collecteur de courant, une couche de matériau actif positif et un revêtement de sécurité disposé entre le collecteur de courant et la couche de matériau actif positif, et dans laquelle le revêtement de sécurité comprend une matrice polymère, un matériau conducteur et une charge inorganique et dans laquelle, quand le revêtement de sécurité et la couche de matériau actif positif sont collectivement désignés par le terme couche de film, la couche de film présente un allongement de 30 % ou plus et dans laquelle la matrice polymère du revêtement de sécurité est de la polyoléfine fluorée et/ou de la polyoléfine chlorée présentant une structure réticulée, dans laquelle l'allongement est déterminé selon l'enseignement fourni par la description.

2. Plaque d'électrode positive selon la revendication 1, dans laquelle la matrice polymère du revêtement de sécurité est de la polyoléfine fluorée et/ou de la polyoléfine chlorée, qui est choisie parmi le polyfluorure de vinylidène (PVDF), le PVDF modifié par un acide carboxylique, le PVDF modifié par un acide acrylique, le polychlorure de vinylidène (PVDC), le PVDC modifié par un acide carboxylique, le PVDC modifié par un acide acrylique, le copolymère de PVDF et/ou le copolymère de PVDC.

3. Plaque d'électrode positive selon l'une quelconque des revendications 1 et 2, dans laquelle le matériau conducteur est choisi parmi un matériau conducteur à base de carbone, un matériau métallique conducteur et/ou un matériau polymère conducteur,
dans laquelle le matériau conducteur à base de carbone est choisi parmi le noir de carbone conducteur, le noir d'acétylène, le graphite, le graphène, les nanotubes de carbone et/ou les nanofibres de carbone ;
le matériau métallique conducteur est choisi parmi la poudre A1, la poudre de Ni et/ou la poudre d'or ; et
le matériau polymère conducteur est choisi parmi le polythiophène conducteur, le polypyrrole conducteur et/ou la polyaniline conductrice.

4. Plaque d'électrode positive selon l'une quelconque des revendications 1 à 3, dans laquelle la charge inorganique est choisie parmi un oxyde métallique, un oxyde non métallique, un carbure métallique, un carbure non métallique et/ou un sel inorganique, ou parmi un matériau ci-dessus modifié par un revêtement en carbone conducteur, un matériau ci-dessus modifié par un revêtement en métal conducteur et/ou un matériau ci-dessus modifié par un revêtement polymère conducteur ;
la charge inorganique du revêtement de sécurité est de préférence de l'oxyde de magnésium, de l'oxyde d'aluminium, du dioxyde de titane, de l'oxyde de zirconium, du dioxyde de silicium, du carbure de silicium, du carbure de bore, du carbonate de calcium, du silicate d'aluminium, du silicate de calcium, du titanate de potassium, du sulfate de baryum, de l'oxyde de lithium et de cobalt, de l'oxyde de lithium-nickel-manganèse-cobalt, de l'oxyde de lithium-nickel-manganèse-aluminium, du lithium-fer-phosphate, du lithium-vanadium-phosphate, du lithium-cobalt-phosphate, du lithium-manganèse-phosphate, du lithium-manganèse-fer-phosphate, du silicate de lithium et de fer, du silicate de lithium et de vanadium, du silicate de lithium et de cobalt, du silicate de lithium et de manganèse, de l'oxyde de spinelle-lithium-manganèse, de l'oxyde de spinelle-lithium-nickel-manganèse et/ou du titanate de lithium, ou un matériau ci-dessus modifié par un revêtement de carbone conducteur, un matériau ci-dessus modifié par un revêtement métallique conducteur, un matériau ci-dessus modifié par un revêtement polymère conducteur ou un matériau ci-dessus modifié par un revêtement de carbone conducteur, un matériau ci-dessus modifié par un revêtement métallique conducteur et/ou un matériau ci-dessus modifié par un revêtement polymère conducteur ;
la charge inorganique présente de préférence un diamètre de particule moyen D de 100 nm ≤ D ≤ 10 µm, et
la charge inorganique présente de préférence une surface spécifique (BET) inférieure ou égale à 500 m²/g, le diamètre de particule moyen D et la surface spécifique (BET) étant déterminés selon la description.

5. Plaque d'électrode positive selon l'une quelconque des revendications 1 à 4, dans laquelle, dans le revêtement de sécurité, par rapport au poids total de la charge inorganique, de la matrice polymère et de la charge conductrice,
la charge inorganique est présente dans une quantité de 35 % en poids à 75 % en poids ;
le matériau conducteur est présent dans une quantité de 5 % en poids à 25 % en poids ; et
la charge inorganique est présente dans une quantité de 10 % en poids à 60% en poids ;
le rapport pondéral entre la matrice polymère et le matériau conducteur est de préférence de 3 ou plus et 8 ou moins.

6. Plaque d'électrode positive selon l'une quelconque des revendications 1 à 6, dans laquelle le collecteur de courant est un collecteur de courant métallique et le collecteur de courant présente un allongement de rupture δ qui satisfait 0,8 % ≤ δ ≤ 4 % ; le collecteur de courant est de préférence un collecteur de courant poreux, l'allongement de rupture δ étant déterminé selon la description.

7. Plaque d'électrode positive selon l'une quelconque des revendications 1 à 6, dans laquelle la couche de film présente un allongement de 80 % ou plus, de préférence 80 % ou plus et 300 % ou moins, l'allongement étant déterminé selon la description ;
la couche de film présente de préférence une épaisseur de côté unique de 30µm∼80µm.

8. Plaque d'électrode positive selon l'une quelconque des revendications 1 à 7, dans laquelle il y a une force de liaison entre la couche de film et le collecteur de courant de 10 N/m ou plus, la force de liaison étant déterminée selon la description.

9. Dispositif électrochimique comprenant la plaque d'électrode positive selon l'une quelconque des revendications 1 à 8, qui est un condensateur, une pile non rechargeable ou une pile rechargeable.
